# FASCICULE DE BREVET EUROPEEN

(11) **EP 3 584 604 B1**
(45) Date de publication et mention de la délivrance du brevet: **30.03.2022**
(21) Numéro de dépôt: 19178266.3
(22) Date de dépôt: 04.06.2019
(51) Int. Cl.: G01S 17/95, G01S 7/481, G01S 7/484, G01N 21/39

(54) **LIDAR À DÉTECTION HÉTÉRODYNE PAR OSCILLATEUR LOCAL ET DOUBLE FAISCEAU DE SONDAGE, À UNE OU PLUSIEURS FRÉQUENCES SIMULTANÉES, ET PROCÉDÉ DE DÉTECTION LIDAR PAR DÉTECTION À DOUBLE HÉTÉRODYNAGE**
LICHTRADAR ZUR HETERODYNEN DETEKTION ÜBER EINEN LOKALEN OSZILLATOR UND DOPPELTEN PRÜFSTRAHL MIT EINER ODER MEHREREN SIMULTANEN FREQUENZEN, UND LICHTRADAR-DETEKTIONSVERFAHREN DURCH DETEKTION MIT DOPPELTER HETERODYNER FREQUENZUMWANDLUNG
LIDAR WITH HETERODYNE DETECTION BY LOCAL OSCILLATOR AND DOUBLE PROBE BEAM, WITH ONE OR MORE SIMULTANEOUS FREQUENCIES, AND LIDAR DETECTION METHOD BY DOUBLE HETERODYNE DETECTION

(30) Priorité: 19.06.2018 FR 1855413
(43) Date de publication de la demande: 25.12.2019
(73) Titulaire: Office National d'Etudes et de Recherches Aérospatiales (ONERA), 91120 Palaiseau (FR); Centre National d'Etudes Spatiales, 75039 Paris Cedex 01 (FR)
(72) Inventeur: HÉBERT, Philippe, 31500 TOULOUSE (FR); LEMAITRE, François, 31650 ST ORENS DE GAMEVILLE (FR); CEZARD, Nicolas, 75014 PARIS (FR)
(74) Mandataire: Germain Maureau

(56) Documents cités:
- FR-A1- 3 027 116
- FR-A1- 3 039 331
- US-A1- 2018 073 856

## Description

Il est connu d'utiliser une source laser configurée pour, à partir d'une première émission de lumière à bande spectrale étroite, centrée sur une première fréquence, générer une première onde lumineuse comprenant une première pluralité de composantes spectrales, chaque composante couvrant une bande, ou raie, spectrale étroite et centrée sur une fréquence différente des autres composantes, de sorte que, dans l'espace des fréquences, la composition spectrale de l'onde lumineuse a la forme d'un premier peigne spectral, la hauteur de chaque raie du peigne correspondant à l'énergie lumineuse de la raie spectrale de la première émission de lumière répartie sur chaque raie du peigne.

Il est également connu de générer, à partir de la première émission de lumière, non seulement une première onde lumineuse, mais également et simultanément une deuxième onde lumineuse, cohérente de la première, et comprenant comme la première onde lumineuse, une deuxième pluralité de composantes spectrales, formant un deuxième peigne spectral, chaque raie spectrale du deuxième peigne étant associée à une raie spectrale du premier peigne légèrement décalée en fréquence par rapport à celle-ci.

Il est enfin connu d'émettre le premier et le deuxième peigne lumineux en direction d'une cible, par exemple une portion d'atmosphère, puis de capter le signal renvoyé par cette cible de façon à faire battre, i.e. à moduler le signal reçu correspondant à une raie du premier peigne avec le signal reçu et associé à la raie du deuxième peigne, puis à filtrer la composante radiofréquence (RF) du signal modulé. Cette modulation se produit pour chaque couple de raies (premier peigne - deuxième peigne).

L'inconvénient de ce dispositif est que, pour chaque raie émise, le signal reçu en provenance de la cible est atténué par le trajet aller/retour de l'onde entre l'émetteur et le récepteur, donc de faible niveau si cette distance est importante. La puissance de la composante RF filtrée est donc elle-même deux fois plus atténuée que le signal reçu de chaque raie prise individuellement ; le rapport signal/bruit du signal est très donc dégradé si les conditions d'expérience font que le bruit de photon n'est pas dominant. Une amélioration connue dans le cas d'une raie d'émission unique ou double et d'une onde lumineuse unique émise vers la cible, consiste à mélanger son retour avec la raie d'un oscillateur local pour bénéficier de la puissance de ce dernier, qui n'a pas subi l'atténuation sur une grande distance. Ce dispositif nommé « détection hétérodyne » ou « détection cohérente » peut être limité dans les fréquences optiques par la longueur de cohérence de la source laser, dont il résulte un déphasage aléatoire entre l'onde lumineuse de retour et l'oscillateur local. Ce déphasage module le signal radiofréquence de façon aléatoire, ce qui contraint à effectuer une moyenne de plusieurs mesures aléatoires d'intensité, affectée d'un écart type statistique défavorable, et donc d'un rapport signal sur bruit final dégradé.

L'invention a donc pour but de résoudre tout ou partie de ces inconvénients.

A cet effet, la présente invention concerne un dispositif de type LIDAR pour une spectroscopie à distance d'une matière, comprenant :
- une voie optique d'émission comportant :
   o une source laser apte à émettre une raie laser à une fréquence génératrice;
   o un générateur fréquentiel d'ondes optiques apte à générer, à partir de la raie laser émise :
      ▪ un premier peigne comprenant au moins une première raie, l'au moins une première raie ayant une fréquence stable et dérivée de la fréquence génératrice; et
      ▪ un deuxième peigne comprenant au moins une deuxième raie, l'au moins une deuxième raie ayant une fréquence stable et dérivée de la fréquence génératrice; et
      ▪ un peigne local comprenant au moins une raie locale, l'au moins une raie locale ayant une fréquence stable et dérivée de la fréquence génératrice;
   o un télescope d'émission apte à émettre un signal d'émission vers la matière traversée par le signal d'émission, le signal d'émission comprenant le premier et le deuxième peigne;
- une voie de réception comprenant :
   o un télescope de réception apte à recevoir un signal réfléchi par la matière traversée par le signal d'émission, le signal réfléchi comprenant :
      ▪ un premier peigne réfléchi, le premier peigne réfléchi comprenant au moins une première raie réfléchie par la matière traversée par l'au moins une première raie du premier peigne du signal d'émission,
      ▪ un deuxième peigne réfléchi, le deuxième peigne réfléchi comprenant au moins une deuxième raie réfléchie par la matière traversée par l'au moins une deuxième raie du deuxième peigne du signal d'émission;
      chaque raie du peigne local étant associée à une première raie correspondante du premier peigne réfléchi, et à une deuxième raie correspondante du deuxième peigne réfléchi;
   o un système de détection configuré pour détecter :
      ▪ au moins un premier signal de battement, de l'au moins une raie du peigne local avec la première raie correspondante du premier peigne réfléchi ; et
      ▪ au moins un deuxième signal de battement, de l'au moins une raie du peigne local avec la deuxième raie correspondante du deuxième peigne réfléchi ; et
      ▪ au moins un troisième signal de battement de l'au moins un premier signal de battement avec l'au moins un deuxième signal de battement, le troisième signal de battement est filtré autour d'une fréquence égale à une valeur absolue d'une différence entre le premier décalage fréquentiel et le deuxième décalage fréquentiel.

Grâce à ces dispositions, chaque raie du peigne local, dont le signal n'est pas atténué par un trajet aller et retour de l'émetteur au récepteur, est mélangée à la première raie correspondante du premier peigne réfléchi et la deuxième raie correspondante du deuxième peigne réfléchi;

Le déphasage éventuel entre chaque raie du peigne local et, d'une part la première raie correspondante, d'autre part la deuxième raie correspondante, sont les mêmes à tout instant car les raies des premier et deuxième peignes subissent, par rapport aux raies du peigne local, les mêmes perturbations; ainsi un troisième signal de battement élimine le déphasage commun et annule l'effet de modulation aléatoire propre à la détection hétérodyne de l'état de l'art. Il permet de bénéficier pleinement de la puissance de l'oscillateur local ; il permet ainsi une amélioration du rapport signal sur bruit importante, malgré l'atténuation liée à la division par deux de l'énergie de chaque peigne, en comparaison de l'énergie qui aurait été celle d'un unique peigne, et malgré les pertes liées au mélange hétérodyne. Ce gain est fonction du rapport entre la puissance du peigne local et la puissance des peignes réfléchis et de la réduction de bande passante permise par la faible valeur de la fréquence du 3^{ème} battement.

Selon un mode de réalisation, l'invention comprend une ou plusieurs des caractéristiques suivantes, seules ou en combinaison.

Selon un mode de réalisation, le générateur fréquentiel est configuré pour générer le premier peigne de manière séparée du deuxième peigne.

Selon un mode de réalisation, le générateur fréquentiel comprend un premier modulateur acousto-optique et un deuxième modulateur acousto-optique, le générateur fréquentiel étant configuré pour générer le premier peigne formé en sortie du premier modulateur acousto-optique de manière séparée du deuxième peigne formé en sortie du deuxième modulateur acousto-optique.

Selon un mode de réalisation, le premier peigne, le deuxième peigne et le peigne local comprennent chacun un nombre de raies supérieur ou égal à 1, de préférence supérieur ou égal à 2, de préférence compris en 2 et 13.

Selon un mode de réalisation, le premier peigne, le deuxième peigne et le peigne local comprennent chacun un nombre de raies supérieur ou égal à 2, de préférence compris en 2 et 13.

Grâce à ces dispositions, il est possible de sonder la matière simultanément en plusieurs points du spectre dans la bande spectrale d'absorption du matériau considéré. Les différentes raies du signal d'émission (premier et deuxième peigne) traverseront simultanément la même zone de la matière sondée et produiront simultanément les différentes raies réfléchies qui composeront le signal réfléchi. Ainsi une petite incertitude sur le positionnement global en fréquence du signal d'émission pourra être compensé par l'échantillonnage large en fréquence, dont le pas fréquentiel est bien maîtrisée par la technologie décrite ci-dessus, obtenu par l'émission de plusieurs raies simultanées ayant des fréquences toutes différentes au sein de chaque peigne. Un recentrage sur la fréquence d'absorption sera possible par traitement après réception. Cet avantage, propre au Lidar à peigne de fréquence, est rendu d'autant plus intéressant que, combiné avec les autres caractéristiques de la présente invention, le rapport signal sur bruit est considérablement amélioré. Ainsi, ces dispositions permettent non seulement de bénéficier de l'amélioration du rapport signal à bruit apportée par le peigne local, mais également d'éliminer plus efficacement les biais induits par la non-simultanéité des mesures effectuées avec un LIDAR DIAL classique.

Selon un mode de réalisation, la fréquence des raies du peigne local sont espacées régulièrement, autour de la fréquence génératrice, avec un pas local, la valeur du pas local étant comprise entre 500 MHz et 2000 MHZ, de préférence égale à 1000 MHz.

Selon un mode de réalisation de l'invention, la fréquence génératrice est une fréquence optique, de préférence située autour de 200 THz, soit 200 000 GHz.

Selon un mode de réalisation, la fréquence des raies du premier peigne sont espacées régulièrement selon un premier pas, autour d'une première fréquence centrale égale à la somme de la fréquence génératrice et d'un premier décalage fréquentiel.

Selon un mode de réalisation de l'invention, le premier décalage fréquentiel est obtenu par l'intermédiaire d'un premier modulateur acousto-optique autour d'une valeur égale à 100 MHz.

Selon un mode de réalisation, la fréquence des raies du deuxième peigne sont espacées régulièrement selon un deuxième pas, autour d'une deuxième fréquence centrale égale à la somme de la fréquence génératrice et d'un deuxième décalage fréquentiel.

Selon un mode de réalisation de l'invention, les premier et deuxième décalages fréquentiel sont obtenus respectivement par l'intermédiaire d'un premier et deuxième modulateurs acousto-optique, de préférence autour d'une valeur égale à environ 100 MHz.

Selon un mode de réalisation, la valeur du premier pas et la valeur du deuxième pas sont égales à la somme de la valeur du pas local avec un écart.

Selon un mode de réalisation de l'invention, la valeur de l'écart entre la valeur des pas du premier et du deuxième peigne d'une part, et la valeur du pas du peigne local d'autre part, est d'environ 10 MHz.

Selon un mode de réalisation, le système de détection comprend une unité de traitement numérique configurée pour traiter l'au moins un premier signal de battement et l'au moins un deuxième signal de battement de manière à générer au moins un troisième signal de battement.

Ce deuxième niveau de battement peut s'opérer, par exemple, de manière numérique et consister en un filtrage spectral du signal temporel hétérodyne et son élévation au carré. Un nouveau filtrage isole la fréquence du nouveau battement, qui porte l'information spectroscopique recherchée dans la matière visée.

Selon un mode de réalisation, l'unité de traitement numérique comprend :
- un convertisseur analogique numérique configuré pour numériser un signal temporel comprenant l'au moins un premier signal de battement et l'au moins un deuxième signal de battement, de manière à générer un signal numérique;
- une première unité de calcul configurée pour calculer un premier spectre numérique du signal numérique;
- une première unité de filtrage configurée pour séparer différentes composantes spectrales du spectre numérique calculé précédemment;
- une deuxième unité de calcul configurée pour, en parallèle, convertir du domaine spectral au domaine temporel, chaque composante spectrale séparée par la première unité de filtrage, de manière à générer, au moins une composante temporelle comprenant au moins une première composante temporelle de l'au moins un premier signal de battement et au moins une deuxième composante temporelle de l'au moins un deuxième signal de battement, chaque première composante temporelle de l'au moins une composante temporelle et chaque deuxième composante temporelle de l'au moins une deuxième composante temporelle correspondant à une raie du peigne local ;
- un mélangeur configuré pour faire battre, en parallèle pour chaque raie du peigne local, la première composante temporelle correspondante de l'au moins un premier signal de battement et la deuxième composante temporelle correspondante de l'au moins un deuxième signal de battement, de façon à générer, correspondant à chaque raie du peigne local, un troisième signal de battement de l'au moins un troisième signal de battement;
- une troisième unité de calcul, configurée pour calculer un spectre numérique de chaque troisième signal de battement de l'au moins un troisième signal de battement, en parallèle pour chaque troisième signal de battement;
- une deuxième unité de filtrage configurée pour isoler, au sein de chaque troisième signal de battement de l'au moins un troisième signal de battement, une composante spectrale basse fréquence.

Selon ces dispositions, la détection du troisième signal de battement par le système de détection peut être réalisée de manière numérique.

Selon un mode de réalisation, chaque paire finale de signaux correspond à une raie du peigne local et à une raie du premier peigne ainsi qu'à une raie du deuxième peigne. Chaque paire de signaux comprend un premier signal de battement d'une raie du peigne local avec une première raie correspondante du premier peigne réfléchi, et un deuxième signal de battement de la raie du peigne local avec la deuxième raie correspondante du deuxième peigne réfléchi.

Selon ces dispositions, le filtrage du troisième signal de battement permet d'isoler le signal qui porte l'information spectroscopique recherchée, en bénéficiant du rapport signal sur bruit amélioré.

Selon un mode de réalisation de l'invention, la valeur de la troisième fréquence intermédiaire est d'environ 1 MHz.

Selon un mode de réalisation, l'invention concerne également un procédé de détection par LIDAR pour une spectroscopie à distance d'une matière, comprenant les étapes suivantes :
- émission par une source laser d'une raie laser à une fréquence génératrice;
- à partir de la raie laser, génération par un générateur fréquentiel:
   o d'un premier peigne comprenant au moins une première raie, l'au moins une première raie ayant une fréquence stable et dérivée de la fréquence génératrice; et
   ∘ d'un deuxième peigne comprenant au moins une deuxième raie, l'au moins une deuxième raie ayant une fréquence stable et dérivée de la fréquence génératrice; et
   o d'un peigne local comprenant au moins une raie locale, l'au moins une raie locale ayant une fréquence stable et dérivée de la fréquence génératrice;
- émission par un télescope d'émission d'un signal d'émission vers la matière traversée par le signal d'émission, le signal d'émission comprenant le premier et le deuxième peigne;
- réception par un télescope de réception:
   o d'un signal réfléchi par la matière traversée par le signal d'émission, le signal réfléchi comprenant :
   ▪ un premier peigne réfléchi, le premier peigne réfléchi comprenant au moins une première raie réfléchie par la matière traversée par l'au moins une première raie du premier peigne du signal d'émission,
   ▪ un deuxième peigne réfléchi, le deuxième peigne réfléchi comprenant au moins une deuxième raie réfléchie par la matière traversée par l'au moins une deuxième raie du deuxième peigne du signal d'émission;
   chaque raie du peigne local étant associée à une première raie correspondante du premier peigne réfléchi, et à une deuxième raie correspondante du deuxième peigne réfléchi;
- détection par un système de détection :
   ▪ d'au moins un premier signal de battement, de l'au moins une raie du peigne local avec la première raie correspondante du premier peigne réfléchi ; et
   ▪ d'au moins un deuxième signal de battement, de l'au moins une raie du peigne local avec la deuxième raie correspondante du deuxième peigne réfléchi ; et
   ▪ d'un troisième signal de battement de l'au moins un premier signal de battement avec l'au moins un deuxième signal de battement, le troisième signal de battement est filtré autour d'une fréquence égale à une valeur absolue d'une différence entre le premier décalage fréquentiel et le deuxième décalage fréquentiel.

Pour sa bonne compréhension, l'invention est décrite en référence aux dessins ci-annexés représentant, à titre d'exemple non limitatif, une forme de réalisation d'un dispositif selon l'invention. Des éléments similaires ou dont la fonction est similaire sont désignés sur les différentes figures par les mêmes références.
Figure 1 est une vue schématique d'un dispositif de spectroscopie à distance selon un mode de réalisation de l'invention
Figure 2 est une vue schématique du spectre en fréquence des différents peignes.
Figure 3 est une vue schématique d'un mode de réalisation numérique d'une partie du système de détection.

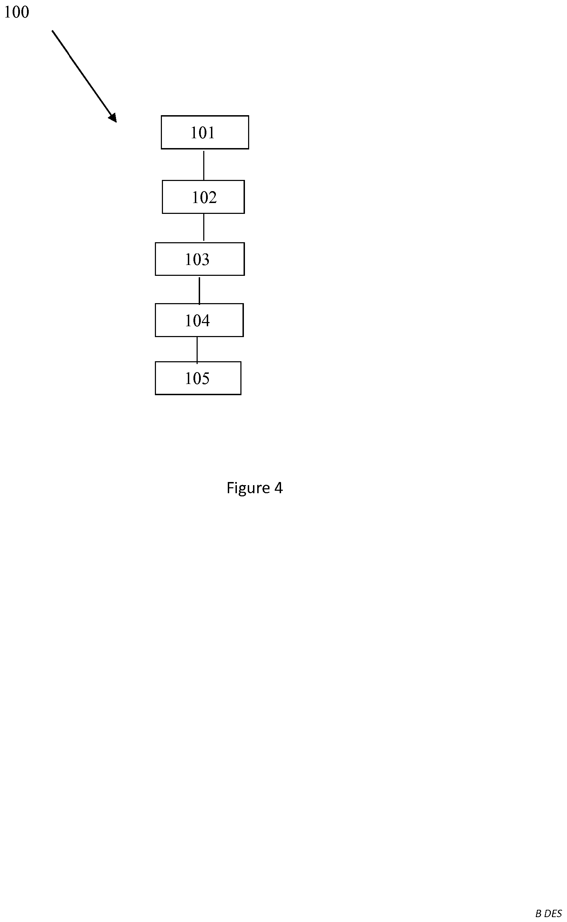

Figure 4 est une représentation simplifiée des différentes étapes du procédé selon l'invention.

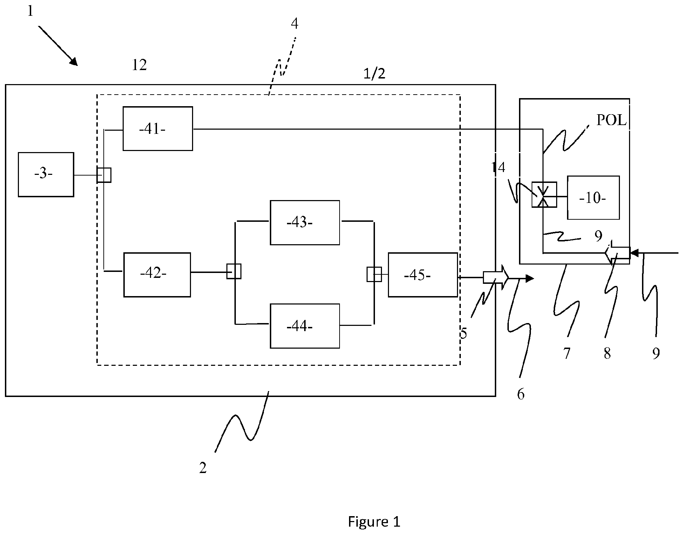

Sur la figure 1, le dispositif 1 de spectroscopie à distance comprend une voie optique d'émission 2 et une voie optique de réception 7.

La voie optique d'émission 2 comprend une source laser 3 configurée pour émettre une raie laser à une fréquence génératrice FG ; la source laser est reliée à un générateur fréquentiel 4 par une fibre optique.

D'une manière générale, la transmission des signaux optiques entre les différents composants optiques du dispositif 1 est réalisé par de la fibre optique, qui, de préférence, assure un maintien de la polarisation des signaux optiques transmis.

En entrée du générateur fréquentiel 4, le faisceau laser est divisée en un premier faisceau qui est conduit à un premier modulateur électro-optique 41 configuré pour générer un premier peigne local POL. Ce premier peigne local comprend au moins une raie locale, chaque raie ayant une fréquence stable et dérivée de la fréquence génératrice FG.

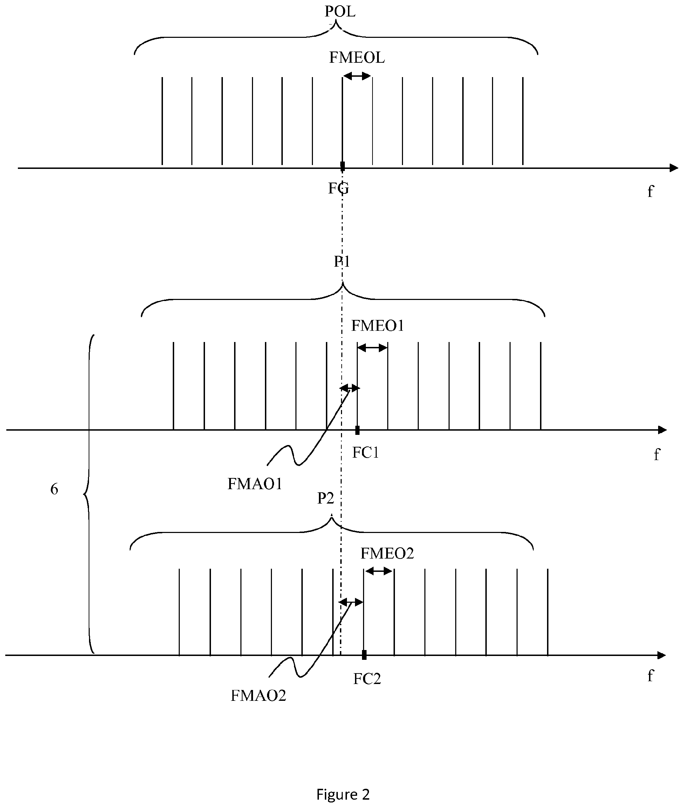

Selon un mode de réalisation, la fréquence génératrice est une fréquence optique, de préférence proche de 200 THz, et le peigne local comprend un nombre de raies supérieur à 2, de préférence compris entre 2 et 13 ; les fréquences des raies sont réparties autour de la fréquence génératrice FG, et sont décalées les unes des autres d'une valeur FMEOL prédéterminée, comprise entre 500 MHz et 2000 MHZ, de préférence égale à 1000 MHz, comme cela est illustré sur la figure 2, sur laquelle 13 raies de fréquences régulièrement réparties de part et d'autre de la fréquence génératrice sont représentées selon un axe des fréquences f.

En entrée du générateur fréquentiel 4, la raie laser est simultanément divisée en un deuxième faisceau qui est conduit à un deuxième modulateur électro-optique 42 qui, en combinaison avec un premier modulateur acousto-optique 43 et un deuxième modulateur acousto-optique 44 , est configuré pour générer un premier peigne P1 formé en sortie du premier modulateur acousto-optique 43 , séparé d'un deuxième peigne P2 formé en sortie du deuxième modulateur acousto-optique 44. Ces premier et deuxième peignes P1, P2 comprennent, au moins une raie, chaque raie ayant une fréquence stable et dérivée de la fréquence génératrice FG.

De préférence, selon un mode de réalisation illustré en figure 2, les premier et deuxième peigne P1, P2, comprennent chacun un nombre de raies identique au nombre de raies du peigne local, i.e. supérieur à 2, de préférence compris entre 2 et 13 ; les fréquences des raies de chacun des peignes P1, P2 sont réparties autour d'une fréquence centrale FC1, FC2, dérivée de la fréquence génératrice FG, et sont décalées les unes des autres respectivement d'une valeur FMEO1 pour le premier peigne P1, FMEO1 étant, par exemple, comprise entre 500 MHz et 2000 MHz, de préférence égale à 1000 MHz, et d'une valeur FMEO2 pour le deuxième peigne P2, FMEO2 étant comprise par exemple entre 500 MHz et 2000 MHz, de préférence égale à 1000 MHz. Selon un mode de réalisation, la fréquence centrale FC1 du premier peigne et la fréquence centrale FC2 du deuxième peigne sont décalées de la fréquence génératrice FG d'une valeur respectivement FMAO1, FMAO2, déterminée respectivement par chacun des deux modulateurs acousto-optique 43, 44.

Selon un mode de réalisation, la valeur du décalage FMAO1 entre la fréquence génératrice, i.e. la fréquence centrale du peigne local, et la fréquence centrale du premier peigne P1, et la valeur du décalage FMAO2 entre la fréquence génératrice, et la fréquence centrale du deuxième peigne P2, sont fixées de préférence autour de 100 MHz, par exemple 110 MHz pour FMAO1 et 111 MHz pour FMAO2.

Chaque raie du peigne local est associée à une première raie correspondante du premier peigne P1, typiquement celle des raies du premier peigne dont la fréquence est la plus proche de la fréquence de la raie considérée sur le peigne local ; de même, chaque raie du peigne local est associée à une deuxième raie correspondante du deuxième peigne P2, typiquement celle des raies du deuxième peigne dont la fréquence est la plus proche de la fréquence de la raie considérée sur le peigne local ;

Selon un mode de réalisation, la valeur du premier pas FMEO1 du premier peigne P1 et la valeur du deuxième pas FMEO2 du deuxième peigne P2, sont égales entre elles, et diffèrent de la valeur du pas local FMEOL du peigne local d'une valeur d'écart D. Selon un mode de réalisation de l'invention, la valeur de l'écart est d'environ 10 MHz.

Selon un mode de réalisation particulier, les valeurs des paramètres suivants sont fixés ainsi pour définir le peigne local POL et les premier et deuxième peignes P1, P2 :
Ecart D = 10,6 MHz
Pas FMEOL du peigne local : FMEOL = 889,4 MHz
Pas FMEO1 du premier peigne P1 : FMEO1 = FMEOL + D= 900 MHz
Pas FMEO2 du deuxième peigne P2 : FMEO2 = FMEOL + D= 900 MHz
Décalage FMAO1 entre la fréquence génératrice, i.e. la fréquence centrale du peigne local, et la fréquence centrale du premier peigne P1 : FMAO1 = 110 MHz
Décalage FMAO2 entre la fréquence génératrice, i.e. la fréquence centrale du peigne local, et la fréquence centrale du deuxième peigne P2 : FMAO2 = 111 MHz

Selon ce mode de réalisation particulier, donné à titre d'exemple, les écarts, exprimés en MHz, entre la fréquence génératrice et les fréquences de chacune des 13 raies qui compose le peigne local POL, telles que réparties autour de la raie d'ordre 0 (à la fréquence génératrice), sont récapitulées dans la deuxième colonne POL du tableau 1 ci-dessous.

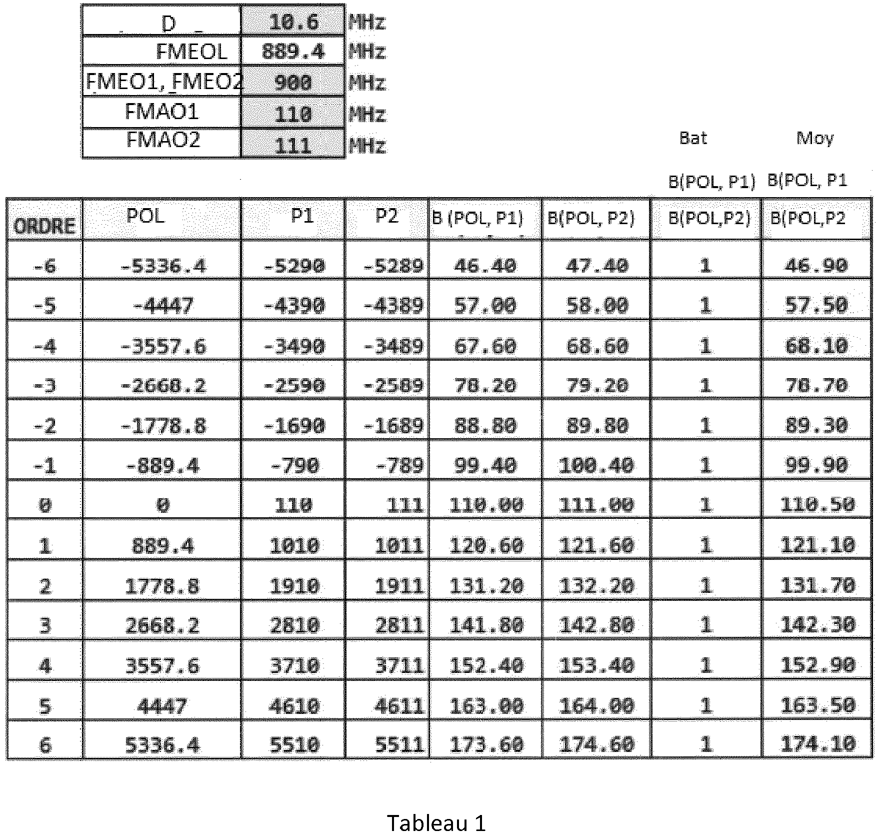

De même, les écarts, exprimés en MHz, entre la fréquence génératrice FG et les fréquences de chacune des 13 raies qui composent le premier peigne P1, telles que réparties autour de la raie d'ordre 0 (à la fréquence génératrice), sont récapitulées dans la troisième colonne P1 du tableau 1.

De même, les écarts, exprimés en MHz, entre la fréquence génératrice et les fréquences de chacune des 13 raies qui composent le deuxième peigne P2, telles que réparties autour de la raie d'ordre 0 (à la fréquence génératrice), sont récapitulées dans la quatrième colonne P2 du tableau 1.

Les fréquences figurant sur une même ligne du tableau 1 sont d'une part, sur la colonne POL, la fréquence d'une raie du peigne local, et d'autre part, sur les colonnes P1 et P2, les fréquences des première raie et deuxième raie correspondantes appartenant respectivement aux premier et deuxième peignes P1, P2, qui sont associées à ladite raie du peigne local.

Le premier peigne P1 et le deuxième peigne P2 simultanément formés de manière séparés, respectivement en sortie du premier modulateur acousto-optique 43 et du deuxième modulateur acousto-optique 44, composent, après leur superposition spatiale au moyen d'un coupleur de préférence à maintien de polarisation, un signal optique envoyé, via une fibre optique, à un amplificateur optique 45 configuré pour amplifier la puissance du signal qu'il reçoit et générer ainsi un signal d'émission optique 6 qui sera émis par un télescope d'émission 5 vers la matière qui doit être sondée à distance par spectroscopie.

Selon un mode de réalisation, l'amplificateur optique 45 sera du type EDFA (de l'anglais « Erbium Doped Fiber Amplifier ») ou de type YDFA (Ytterbium), connus en soi dans l'état de la technique.

Le télescope d'émission 5, connu également dans l'état de la technique, est configuré pour recevoir le signal amplifié 6 et l'émettre vers la matière à sonder, de sorte que le signal d'émission 6 traverse la matière à sonder puis se réfléchisse sur une cible dure, générant ainsi un signal réfléchi 9 qui est renvoyé vers un télescope de réception 8.

La voie optique de réception 7 comprend un télescope de réception 8, un module de couplage optique 14, et un système de détection 10, ces composants étant reliés par une liaison en fibre optique, comme indiqué plus haut.

Selon un mode de réalisation, le télescope d'émission 5 et le télescope de réception 7 peuvent se présenter sous la forme d'un composant unique, dans le cas d'une configuration dite monostatique.

Le télescope de réception 7 est configuré pour recevoir le signal réfléchi 9, après que le signal d'émission 6 ait traversé la matière à sonder , le signal réfléchi 9 comprenant :
- un premier peigne réfléchi, le premier peigne réfléchi comprenant au moins une première raie réfléchie après la traversée de la matière par l'au moins une première raie du premier peigne P1 du signal d'émission 6,
- un deuxième peigne réfléchi, le deuxième peigne réfléchi comprenant au moins une deuxième raie réfléchie après traversée de la matière par l'au moins une deuxième raie du deuxième peigne P2 du signal d'émission 6.

De la même manière que chaque raie du peigne local est associée à une première raie correspondante du premier peigne P1, et à une deuxième raie correspondante du deuxième peigne P2, chaque raie du peigne local est ainsi associée à une première raie correspondante du premier peigne réfléchi, i.e. à la raie correspondante du premier peigne P1 telle que réfléchie après la traversée de la matière par le signal d'émission 6, et à une deuxième raie correspondante du deuxième peigne réfléchi, i.e. à la raie correspondante du deuxième peigne P2 telle que réfléchie après la traversée de la matière par le signal d'émission 6.

Le module de couplage 14 est configuré pour coupler le signal du peigne local POL et le signal réfléchi 9 et à envoyer le signal couplé au système de détection 10.

Selon un mode de réalisation le système de détection 10 comprend un photodétecteur configuré pour produire :
- au moins un premier signal de battement 11, de l'au moins une raie du peigne local avec la première raie correspondante du premier peigne réfléchi ; et
- au moins un deuxième signal de battement 12, de l'au moins une raie du peigne local avec la deuxième raie correspondante du deuxième peigne réfléchi ;

Selon un mode de réalisation, le photodétecteur détecte et produit ainsi un premier niveau de battement, optique, dans lequel est généré au moins un premier signal de battement hétérodyne 11 entre chaque raie du peigne local POL et la première raie correspondante du premier peigne réfléchi composant le signal réfléchi 9, ainsi qu'au moins un deuxième signal de battement hétérodyne 12 entre chaque raie du peigne local POL et la deuxième raie correspondante du deuxième peigne réfléchi composant également le signal réfléchi 9.

L'au moins un premier signal de battement 11 comprend, pour chaque raie du peigne local, un premier signal de battement entre la raie du peigne local et la première raie correspondante du premier peigne P1 réfléchi. De même l'au moins un deuxième signal de battement 12 comprend, pour chaque raie du peigne local, un deuxième signal de battement entre la raie du peigne local et la première raie correspondante du deuxième peigne P2 réfléchi.

Il est connu de s'intéresser plus particulièrement, au sein de chaque signal de battement, au signal de fréquence intermédiaire égale à la différence des fréquences des signaux couplés.

Ainsi selon un mode de réalisation correspondant aux valeurs des paramètres fixées plus haut, à titre d'exemple, pour définir le peigne local POL et les premier et deuxième peignes P1, P2 selon le tableau 1 ci-dessus, le même tableau 1 fourni à la colonne B (POL, P1) les fréquences intermédiaires des signaux qui composent chaque premier signal de battement 11 des différentes raies du peigne local avec les raies correspondantes du premier peigne réfléchi qui composent en partie le signal réfléchi 9; le même tableau 1 fourni à la colonne B (POL, P2) les fréquences intermédiaires des signaux qui composent chaque deuxième signal de battement 12 des différentes raies du peigne local avec les raies correspondantes du deuxième peigne réfléchi, qui composent également le signal réfléchi 9.

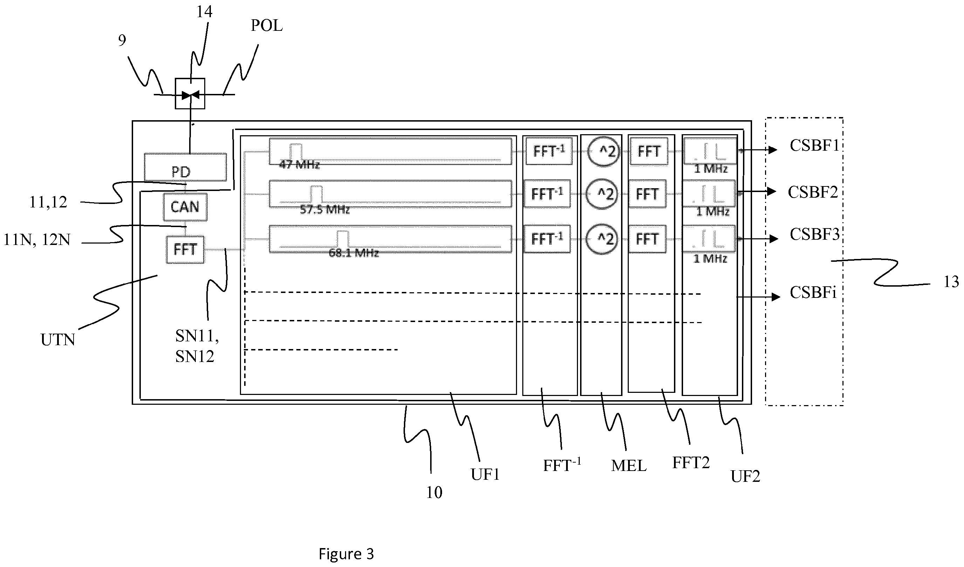

Comme cela est illustré à la figure 3, le système de détection 10 est également configuré pour faire battre, en un deuxième niveau de battement, électrique, et pour chaque raie du peigne local, le premier signal de battement, correspondant à cette raie du peigne local, de l'au moins un premier signal de battement 11 avec le deuxième signal de battement, correspondant à cette même raie du peigne local, de l'au moins un deuxième signal de battement 12, pour générer ainsi, pour chaque raie du peigne local, au moins un troisième signal de battement 13, l'au moins un troisième signal de battement 13 comprenant autant de signal de battement CSBF1, CSBF2, CSBF3, ...CSBFi,... qu'il y de raies différentes dans le peigne local.

Pour ce faire, pour chaque raie du peigne local :
- le signal de battement de l'au moins un premier signal de battement 11 est filtré autour d'une fréquence égale à la moyenne des fréquences respectives de la raie du peigne local et de la raie correspondante du premier peigne P1 réfléchi, ce qui génère un premier signal de battement filtré;
- de même, chaque signal de battement de l'au moins un deuxième signal de battement 12 est filtré autour d'une fréquence égale à la moyenne des fréquences respectives de la raie du peigne local et de la raie correspondante du deuxième peigne P2 réfléchi, ce qui génère un deuxième signal de battement filtré.

Ainsi, pour chaque raie du peigne local est généré un premier signal de battement filtré et un deuxième signal de battement filtré.

Puis en un deuxième niveau de battement, ces premier et deuxième signaux de battement filtrés sont mélangés pour battre et générer un troisième signal de battement CSBF1.

Ce processus est répété ainsi de suite autant de fois qu'il y a de raies dans les peignes local, P1 et P2, générant ainsi la suite des signaux de battement CSBF1, CSBF2, CSBF3, ...CSBFi,... qui composent l'au moins un troisième signal de battement 13.

Pour isoler le signal qui porte l'information spectroscopique recherchée, il convient de filtrer, pour chaque raie du peigne local, le troisième signal de battement 13 autour d'une fréquence égale à une valeur absolue d'une différence entre le premier décalage fréquentiel FMAO1 et le deuxième décalage fréquentiel FMAO2.

Ainsi selon un mode de réalisation correspondant aux valeurs des paramètres fixées plus haut à titre d'exemple, pour définir le peigne local POL et les premier et deuxième peigne P1, P2 selon le tableau 1 ci-dessus, il apparaît à l'avant dernière colonne du tableau 1 qu'en filtrant l'au moins un troisième signal de battement 13 autour d'une fréquence intermédiaire de 1 MHz, on isole le signal qui porte l'information spectroscopique recherchée, avec un rapport signal sur bruit maximum. Cette amélioration du rapport signal sur bruit est apportée par le traitement décrit ci-avant, et dont un mode de réalisation numérique a maintenant être décrit.

Selon un mode de réalisation illustré à la figure 3, le système de détection 10 comprend une unité de traitement numérique UTN configurée pour traiter en parallèle, pour chaque raie du peigne local, l'au moins un premier signal de battement 11 et l'au moins un deuxième signal de battement 12, de manière à générer l'au moins un troisième signal de battement 13.

Selon ce mode de réalisation, l'unité de traitement numérique UTN comprend :
- un convertisseur analogique numérique CAN configuré pour numériser un signal temporel comprenant l'au moins un premier signal de battement 11 et l'au moins un deuxième signal de battement 12, de manière à générer un signal numérique 11N, 12N;
- une première unité de calcul FFT configurée pour calculer un premier spectre numérique SN11, SN12 du signal numérique 11N, 12N;
- une première unité de filtrage UF1 configurée pour séparer différentes composantes spectrales du spectre numérique SN11, SN12 calculé précédemment;
- une deuxième unité de calcul FFT⁻¹ configurée pour, en parallèle, convertir du domaine spectral au domaine temporel, chaque composante spectrale séparée par la première unité de filtrage UF1, de manière à générer, au moins une composante temporelle comprenant au moins une première composante temporelle de l'au moins un premier signal de battement 11 et au moins une deuxième composante temporelle de l'au moins un deuxième signal de battement 12, chaque première composante temporelle de l'au moins une composante temporelle et chaque deuxième composante temporelle de l'au moins une deuxième composante temporelle correspondant à une raie du peigne local ;
- un mélangeur MEL configuré pour faire battre, en parallèle pour chaque raie du peigne local, la première composante temporelle correspondante de l'au moins un premier signal de battement 11 et la deuxième composante temporelle correspondante de l'au moins un deuxième signal de battement 12, de façon à générer, correspondant à chaque raie du peigne local, un troisième signal de battement de l'au moins un troisième signal de battement;
- une troisième unité de calcul FFT2, configurée pour calculer un spectre numérique de chaque troisième signal de battement de l'au moins un troisième signal de battement, en parallèle pour chaque troisième signal de battement;
- une deuxième unité de filtrage UF2 configurée pour isoler, au sein de chaque troisième signal de battement de l'au moins un troisième signal de battement, une composante spectrale basse fréquence CSBF1, CSBF2, CSBF3, ...,CSBFi,... .

Selon ces dispositions, la détection du troisième signal de battement par le système de détection est réalisée par exemple de manière numérique. Le deuxième niveau de battement élimine, à tout instant, les déphasages entre le peigne P1 et l'oscillateur local d'une part, et entre le peigne P2 et l'oscillateur local d'autre part, qui étant les mêmes au 1^{er} ordre, s'annulent. Cela annule la décorrélation qui autrement dégraderait le signal hétérodyne final.

L'invention concerne également un procédé 100 de détection par LIDAR pour une spectroscopie à distance d'une matière, le procédé comprenant les étapes suivantes :
- émission 101 par une source laser 3 d'une raie laser à une fréquence génératrice FG ;
- à partir de la raie laser, génération 102 par un générateur fréquentiel 4:
   ▪ d'un premier peigne P1 comprenant au moins une première raie, l'au moins une première raie ayant une fréquence stable et dérivée de la fréquence génératrice FG; et
   ▪ d'un deuxième peigne P2 comprenant au moins une deuxième raie, l'au moins une deuxième raie ayant une fréquence stable et dérivée de la fréquence génératrice; et
   ▪ d'un peigne local POL comprenant au moins une raie locale, l'au moins une raie locale ayant une fréquence stable et dérivée de la fréquence génératrice;
      o émission 103 par un télescope d'émission 5 d'un signal d'émission 6 vers la matière traversée par le signal d'émission 6, le signal d'émission 6 comprenant le premier et le deuxième peigne;
- réception 104 par un télescope de réception 8:
   ∘ d'un signal réfléchi 9 par la matière traversée par le signal d'émission 6, le signal réfléchi 9 comprenant :
      ▪ un premier peigne réfléchi, le premier peigne réfléchi comprenant au moins une première raie réfléchie par la matière traversée par l'au moins une première raie du premier peigne du signal d'émission,
      ▪ un deuxième peigne réfléchi, le deuxième peigne réfléchi comprenant au moins une deuxième raie réfléchie par la matière traversée par l'au moins une deuxième raie du deuxième peigne du signal d'émission;
      chaque raie du peigne local étant associée à une première raie correspondante du premier peigne réfléchi, et à une deuxième raie correspondante du deuxième peigne réfléchi;
   ∘ détection 105 par un système de détection 10 :
      ▪ d'au moins un premier signal de battement 11, de l'au moins une raie du peigne local avec la première raie correspondante du premier peigne réfléchi ; et
      ▪ d'au moins un deuxième signal de battement 12, de l'au moins une raie du peigne local avec la deuxième raie correspondante du deuxième peigne réfléchi ; et
      ▪ d'un troisième signal de battement 13 de l'au moins un premier signal de battement avec l'au moins un deuxième signal de battement, le troisième signal de battement est filtré autour d'une fréquence égale à une valeur absolue d'une différence entre le premier décalage fréquentiel et le deuxième décalage fréquentiel.

## Revendications

1. Dispositif (1) de type LIDAR pour une spectroscopie à distance d'une matière, comprenant :
- une voie optique d'émission (2) comportant :
o une source laser (3) apte à émettre une raie laser à une fréquence génératrice (FG) ;
o un générateur fréquentiel (4) d'ondes optiques apte à générer, à partir de la raie laser émise :
▪ un premier peigne (P1) comprenant au moins une première raie, l'au moins une première raie ayant une fréquence stable et dérivée de la fréquence génératrice (FG); et
▪ un deuxième peigne (P2) comprenant au moins une deuxième raie, l'au moins une deuxième raie ayant une fréquence stable et dérivée de la fréquence génératrice (FG); et
▪ un peigne local (POL) comprenant au moins une raie locale, l'au moins une raie locale ayant une fréquence stable et dérivée de la fréquence génératrice (FG);
o un télescope d'émission (5) apte à émettre un signal d'émission (6) vers la matière traversée par le signal d'émission (6), le signal d'émission (6) comprenant le premier et le deuxième peigne (P1,P2);
- une voie de réception (7) comprenant :
o un télescope de réception (8) apte à recevoir un signal réfléchi (9) par la matière traversée par le signal d'émission (6), le signal réfléchi (9) comprenant :
▪ un premier peigne réfléchi, le premier peigne réfléchi comprenant au moins une première raie réfléchie par la matière traversée par l'au moins une première raie du premier peigne du signal d'émission,
▪ un deuxième peigne réfléchi, le deuxième peigne réfléchi comprenant au moins une deuxième raie réfléchie par la matière traversée par l'au moins une deuxième raie du deuxième peigne du signal d'émission;
chaque raie du peigne local étant associée à une première raie correspondante du premier peigne réfléchi, et à une deuxième raie correspondante du deuxième peigne réfléchi;
∘ un système de détection (10) configuré pour détecter :
▪ au moins un premier signal de battement (11), de l'au moins une raie du peigne local avec la première raie correspondante du premier peigne réfléchi ; et
▪ au moins un deuxième signal de battement (12), de l'au moins une raie du peigne local avec la deuxième raie correspondante du deuxième peigne réfléchi ; et
▪ au moins un troisième signal de battement (13) de l'au moins un premier signal de battement (11) avec l'au moins un deuxième signal de battement (12) ;
le troisième signal de battement étant filtré autour d'une fréquence égale à une valeur absolue d'une différence entre un premier décalage fréquentiel (FMAO1) et un deuxième décalage fréquentiel (FMAO2).

2. Dispositif selon la revendication 1, dans lequel le premier peigne, le deuxième peigne et le peigne local comprennent chacun un nombre de raies supérieur ou égal à 1, de préférence supérieur ou égal à 2, de préférence compris en 2 et 13.

3. Dispositif selon la revendication 2, dans lequel le premier peigne, le deuxième peigne et le peigne local comprennent chacun un nombre de raies supérieur ou égal à 2, de préférence compris en 2 et 13.

4. Dispositif selon la revendication 3, dans lequel la fréquence des raies du peigne local sont espacées régulièrement, autour de la fréquence génératrice, avec un pas local (FMEOL), la valeur du pas local (FMEOL) étant comprise entre 500 MHz et 2000 MHZ, de préférence égale à 1000 MHz.

5. Dispositif selon l'une des revendications 3 ou 4, dans lequel la fréquence des raies du premier peigne sont espacées régulièrement selon un premier pas (FMEO1), autour d'une première fréquence centrale (FC1) égale à la somme de la fréquence génératrice et du premier décalage fréquentiel (FMAO1).

6. Dispositif selon l'une des revendications 3 à 5, dans lequel la fréquence des raies du deuxième peigne sont espacées régulièrement selon un deuxième pas (FMEO2), autour d'une deuxième fréquence centrale (FC2) égale à la somme de la fréquence génératrice et du deuxième décalage fréquentiel (FMAO2).

7. Dispositif selon la revendication 6, dans lequel la valeur du premier pas (FMEO1) et la valeur du deuxième pas (FMEO2) sont égales à la somme de la valeur du pas local (FMEOL) avec un écart (D).

8. Dispositif selon l'une des revendications précédentes, le système de détection comprend une unité de traitement numérique (UTN) configurée pour traiter l'au moins un premier signal de battement (11) et l'au moins un deuxième signal de battement (12) de manière à générer au moins un troisième signal de battement (13) .

9. Dispositif selon la revendication 8, dans lequel l'unité de traitement numérique (UTN) comprend :
- un convertisseur analogique numérique (CAN) configuré pour numériser un signal temporel comprenant l'au moins un premier signal de battement (11) et l'au moins un deuxième signal de battement (12), de manière à générer un signal numérique (11N, 12N);
- une première unité de calcul (FFT) configurée pour calculer un premier spectre numérique (SN11, SN12) du signal numérique (11N, 12N);
- une première unité de filtrage (UF1) configurée pour séparer différentes composantes spectrales du spectre numérique (SN11, SN12) calculé précédemment;
- une deuxième unité de calcul (FFT⁻¹) configurée pour, en parallèle, convertir du domaine spectral au domaine temporel, chaque composante spectrale séparée par la première unité de filtrage (UF1), de manière à générer, au moins une composante temporelle comprenant au moins une première composante temporelle de l'au moins un premier signal de battement (11) et au moins une deuxième composante temporelle de l'au moins un deuxième signal de battement (12), chaque première composante temporelle de l'au moins une composante temporelle et chaque deuxième composante temporelle de l'au moins une deuxième composante temporelle correspondant à une raie du peigne local ;
- un mélangeur (MEL) configuré pour faire battre, en parallèle pour chaque raie du peigne local, la première composante temporelle correspondante de l'au moins un premier signal de battement (11) et la deuxième composante temporelle correspondante de l'au moins un deuxième signal de battement (12), de façon à générer, correspondant à chaque raie du peigne local, un troisième signal de battement de l'au moins un troisième signal de battement;
- une troisième unité de calcul (FFT2), configurée pour calculer un spectre numérique de chaque troisième signal de battement de l'au moins un troisième signal de battement, en parallèle pour chaque troisième signal de battement;
- une deuxième unité de filtrage (UF2) configurée pour isoler, au sein de chaque troisième signal de battement de l'au moins un troisième signal de battement, une composante spectrale basse fréquence (CSBF1, CSBF2, CSBF3, ...,CSBFi,...) .

10. Procédé (100) de détection par LIDAR pour une spectroscopie à distance d'une matière, comprenant les étapes suivantes :
- émission (101) par une source laser (3) d'une raie laser à une fréquence génératrice (FG) ;
- à partir de la raie laser, génération (102) par un générateur fréquentiel (4) :
i. d'un premier peigne (P1) comprenant au moins une première raie, l'au moins une première raie ayant une fréquence stable et dérivée de la fréquence génératrice (FG); et
ii. d'un deuxième peigne (P2) comprenant au moins une deuxième raie, l'au moins une deuxième raie ayant une fréquence stable et dérivée de la fréquence génératrice; et
iii. d'un peigne local (POL) comprenant au moins une raie locale, l'au moins une raie locale ayant une fréquence stable et dérivée de la fréquence génératrice;
- émission (103) par un télescope d'émission (5) d'un signal d'émission (6) vers la matière traversée par le signal d'émission (6), le signal d'émission (6) comprenant le premier et le deuxième peigne (P1,P2);
- réception (104) par un télescope de réception (8):
b. d'un signal réfléchi (9) par la matière traversée par le signal d'émission (6), le signal réfléchi (9) comprenant :
i. un premier peigne réfléchi, le premier peigne réfléchi comprenant au moins une première raie réfléchie par la matière traversée par l'au moins une première raie du premier peigne du signal d'émission,
ii. un deuxième peigne réfléchi, le deuxième peigne réfléchi comprenant au moins une deuxième raie réfléchie par la matière traversée par l'au moins une deuxième raie du deuxième peigne du signal d'émission;
chaque raie du peigne local étant associée à une première raie correspondante du premier peigne réfléchi, et à une deuxième raie correspondante du deuxième peigne réfléchi;
- détection (105) par un système de détection (10) :
iii. d'au moins un premier signal de battement (11), de l'au moins une raie du peigne local avec la première raie correspondante du premier peigne réfléchi ; et
iv. d'au moins un deuxième signal de battement (12), de l'au moins une raie du peigne local avec la deuxième raie correspondante du deuxième peigne réfléchi ; et
v. d'un troisième signal de battement (13) de l'au moins un premier signal de battement avec l'au moins un deuxième signal de battement ;
le troisième signal de battement étant filtré autour d'une fréquence égale à une valeur absolue d'une différence entre un premier décalage fréquentiel (FMAO1) et un deuxième décalage fréquentiel (FMAO2).

## Patentansprüche

1. Vorrichtung (1) des Typs LIDAR für eine Fernspektroskopie eines Materials, umfassend:
- einen optischen Übertragungskanal (2), aufweisend:
o eine Laserquelle (3), die in der Lage ist, eine Laserlinie mit einer Generatorfrequenz (FG) auszusenden;
o einen Frequenzgenerator (4) für optische Wellen, der in der Lage ist, anhand der ausgesendeten Laserlinie zu erzeugen:
▪ einen ersten Kamm (P1), mindestens eine erste Linie umfassend, wobei die mindestens eine erste Linie eine stabile Frequenz hat und von der Generatorfrequenz (FG) abgeleitet ist; und
▪ einen zweiten Kamm (P2), mindestens eine zweite Linie umfassend, wobei die mindestens eine zweite Linie eine stabile Frequenz hat und von der Generatorfrequenz (FG) abgeleitet ist; und
▪ einen lokalen Kamm (POL), mindestens eine lokale Linie umfassend, wobei die mindestens eine lokale Linie eine stabile Frequenz hat und von der Generatorfrequenz (FG) abgeleitet ist;
o ein Sendeteleskop (5), das in der Lage ist, ein Sendesignal (6) in Richtung des vom Sendesignal (6) durchdrungenen Materials auszusenden, wobei das Sendesignal (6) den ersten und den zweiten Kamm (P1,P2) umfasst;
- einen Empfangskanal (7), umfassend:
∘ ein Empfangsteleskop (8), das in der Lage ist, ein Signal (9) zu empfangen, das von dem vom Sendesignal (6) durchdrungenen Material reflektiert wird, wobei das reflektierte Signal (9) umfasst:
▪ einen ersten reflektierten Kamm, wobei der erste reflektierte Kamm mindestens eine erste Linie umfasst, die von dem Material reflektiert wird, das von der mindestens einen ersten Linie des ersten Kamms des Sendesignals durchdrungen wird,
▪ einen zweiten reflektierten Kamm, wobei der zweite reflektierte Kamm mindestens eine zweite Linie umfasst, die von dem Material reflektiert wird, das von der mindestens einen zweiten Linie des zweiten Kamms des Sendesignals durchdrungen wird;
wobei jede Linie des lokalen Kamms einer entsprechenden ersten Linie des ersten reflektierten Kamms und einer entsprechenden zweiten Linie des zweiten reflektierten Kamms zugeordnet ist;
∘ ein Erkennungssystem (10), das konfiguriert ist, um zu erkennen:
▪ mindestens ein erstes Schwebungssignal (11) der mindestens einen Linie des lokalen Kamms mit der entsprechenden ersten Linie des ersten reflektierten Kamms; und
▪ mindestens ein zweites Schwebungssignal (12) der mindestens einen Linie des lokalen Kamms mit der entsprechenden zweiten Linie des zweiten reflektierten Kamms; und
▪ mindestens ein drittes Schwebungssignal (13) des mindestens einen ersten Schwebungssignals (11) mit dem mindestens einen zweiten Schwebungssignal (12);
wobei das dritte Schwebungssignal um eine Frequenz gefiltert wird, die gleich einem Absolutwert einer Differenz zwischen einem ersten Frequenzoffset (FMAO1) und einem zweiten Frequenzoffset (FMAO2) ist.

2. Vorrichtung nach Anspruch 1, wobei der erste Kamm, der zweite Kamm und der lokale Kamm jeder eine Anzahl von Linien größer oder gleich 1 umfasst, vorzugsweise größer oder gleich 2, vorzugsweise zwischen 2 und 13.

3. Vorrichtung nach Anspruch 2, wobei der erste Kamm, der zweite Kamm und der lokale Kamm jeder eine Anzahl von Linien größer oder gleich 2 umfasst, vorzugsweise zwischen 2 und 13.

4. Vorrichtung nach Anspruch 3, wobei die Frequenz der Linien des lokalen Kamms regelmäßig um die Generatorfrequenz mit einem lokalen Abstand (FMEOL) beabstandet ist, wobei der Wert des lokalen Abstands (FMEOL) zwischen 500 MHz und 2000 MHz liegt, vorzugsweise gleich 1000 MHz.

5. Vorrichtung nach einem der Ansprüche 3 oder 4, wobei die Frequenz der Linien des ersten Kamms regelmäßig gemäß eines ersten Abstands (FMEO1) um eine erste Mittenfrequenz (FC1) beabstandet ist, die gleich der Summe der Generatorfrequenz und dem ersten Frequenzoffset (FMAO1) ist.

6. Vorrichtung nach einem der Ansprüche 3 bis 5, wobei die Frequenz der Linien des zweiten Kamms regelmäßig gemäß eines zweiten Abstands (FMEO2) um eine zweite Mittenfrequenz (FC2) beabstandet ist, die gleich der Summe der Generatorfrequenz und des zweiten Frequenzoffsets (FMAO2) ist.

7. Vorrichtung nach Anspruch 6, wobei der Wert des ersten Abstands (FMEO1) und der Wert des zweiten Abstands (FMEO2) gleich der Summe des Wertes des lokalen Abstands (FMEOL) mit einer Abweichung (D) sind.

8. Vorrichtung nach einem der vorhergehenden Ansprüche, wobei das Erkennungssystem eine digitale Verarbeitungseinheit (UTN) umfasst, die konfiguriert ist, um das mindestens eine erste Schwebungssignal (11) und das mindestens eine zweite Schwebungssignal (12) zu verarbeiten, um mindestens ein drittes Schwebungssignal (13) zu erzeugen.

9. Vorrichtung nach Anspruch 8, wobei die digitale Verarbeitungseinheit (UTN) umfasst:
- einen Analog-Digital-Umsetzer (CAN), der konfiguriert ist, um ein Zeitsignal zu digitalisieren, das mindestens ein erstes Schwebungssignal (11) und das mindestens eine zweite Schwebungssignal (12) umfasst, um ein digitales Signal (11N, 12N) zu erzeugen;
- eine erste Berechnungseinheit (FFT), die konfiguriert ist, um ein erstes digitales Spektrum (SN11, SN12) des digitalen Signals (11N, 12N) zu berechnen;
- eine erste Filtereinheit (UF1), die konfiguriert ist, um verschiedene Spektralkomponenten des zuvor berechneten digitalen Spektrums (SN11, SN12) zu trennen;
- eine zweite Berechnungseinheit (FFT⁻¹), die konfiguriert ist, um parallel jede Spektralkomponente, die durch die erste Filtereinheit (UF1) getrennt ist, vom Spektralbereich in den Zeitbereich umzuwandeln, um mindestens eine Zeitkomponente zu erzeugen, die mindestens eine erste Zeitkomponente des mindestens einen ersten Schwebungssignals (11) umfasst und mindestens eine zweite Zeitkomponente des mindestens einen zweiten Schwebungssignals (12), wobei jede erste Zeitkomponente der mindestens einen Zeitkomponente und jede zweite Zeitkomponente der mindestens einen zweiten Zeitkomponente einer Linie des lokalen Kamms entspricht;
- einen Mischer (MEL), der konfiguriert ist, um parallel für jede Linie des lokalen Kamms die entsprechende erste Zeitkomponente des mindestens einen ersten Schwebungssignals (11) und die entsprechende zweite Zeitkomponente des mindestens einen zweiten Schwebungssignals (12) schwingen zu lassen, um entsprechend jeder Linie des lokalen Kamms ein drittes Schwebungssignal des mindestens einen dritten Schwebungssignals zu erzeugen;
- eine dritte Berechnungseinheit (FFT2), die konfiguriert ist, um ein digitales Spektrum jedes dritten Schwebungssignals des mindestens einen dritten Schwebungssignals parallel für jedes dritte Schwebungssignal zu berechnen;
- eine zweite Filtereinheit (UF2), die konfiguriert ist, um innerhalb jedes dritten Schwebungssignals des mindestens einen dritten Schwebungssignals eine niederfrequente Spektralkomponente (CSBF1, CSBF2, CSBF3, ..., CSBFi, ...) zu isolieren.

10. Erkennungsverfahren (100) durch LIDAR für eine Fernspektroskopie eines Materials, die folgenden Schritte umfassend:
- Aussendung (101) einer Laserlinie durch eine Laserquelle (3) mit einer Generatorfrequenz (FG);
- anhand der Laserlinie, Erzeugung (102) durch einen Frequenzgenerator (4):
i. eines ersten Kamms (P1), mindestens eine erste Linie umfassend, wobei die mindestens eine erste Linie eine stabile Frequenz hat und von der Generatorfrequenz (FG) abgeleitet ist; und
ii. eines zweiten Kamms (P2), mindestens eine zweite Linie umfassend, wobei die mindestens eine zweite Linie eine stabile Frequenz hat und von der Generatorfrequenz abgeleitet ist; und
iii. eines lokalen Kamms (POL), mindestens eine lokale Linie umfassend, wobei die mindestens eine lokale Linie eine stabile Frequenz hat und von der Generatorfrequenz abgeleitet ist;
- Aussendung (103) eines Sendesignals (6) durch ein Sendeteleskop (5) in Richtung des vom Sendesignal (6) durchdrungenen Materials, wobei das Sendesignal (6) den ersten und den zweiten Kamm (P1,P2) umfasst;
- Empfang (104) durch ein Empfangsteleskop (8):
b. eines Signals (9), das von dem Material reflektiert wird, das von dem Sendesignal (6) durchdrungen wird, wobei das reflektierte Signal (9) umfasst:
i. einen ersten reflektierten Kamm, wobei der erste reflektierte Kamm mindestens eine erste Linie umfasst, die von dem Material reflektiert wird, das von der mindestens einen ersten Linie des ersten Kamms des Sendesignals durchdrungen wird,
ii. einen zweiten reflektierten Kamm, wobei der zweite reflektierte Kamm mindestens eine zweite Linie umfasst, die von dem Material reflektiert wird, das von der mindestens einen zweiten Linie des zweiten Kamms des Sendesignals durchdrungen wird;
wobei jede Linie des lokalen Kamms einer entsprechenden ersten Linie des ersten reflektierten Kamms und einer entsprechenden zweiten Linie des zweiten reflektierten Kamms zugeordnet ist;
- Erkennung (105) durch ein Erkennungssystem (10):
iii. mindestens eines ersten Schwebungssignals (11) der mindestens einen Linie des lokalen Kamms mit der entsprechenden ersten Linie des ersten reflektierten Kamms; und
iv. mindestens eines zweiten Schwebungssignals (12) der mindestens einen Linie des lokalen Kamms mit der entsprechenden zweiten Linie des zweiten reflektierten Kamms; und
v. eines dritten Schwebungssignals (13) des mindestens einen ersten Schwebungssignals mit dem mindestens einen zweiten Schwebungssignal;
wobei das dritte Schwebungssignal um eine Frequenz gefiltert wird, die gleich einem Absolutwert einer Differenz zwischen einem ersten Frequenzoffset (FMAO1) und einem zweiten Frequenzoffset (FMAO2) ist.

## Claims

1. A LIDAR type device (1) for a remote spectroscopy of a matter, comprising:
- an optical emission channel (2) including:
∘ a laser source (3) adapted to emit a laser stripe at a generating frequency (FG);
∘ an optical waves frequency generator (4) adapted to generate, from the emitted laser stripe:
▪ a first comb (P1) comprising at least one first stripe, the at least one first stripe having a stable frequency and derived from the generating frequency (FG); and
▪ a second comb (P2) comprising at least one second stripe, the at least one second stripe having a stable frequency and derived from the generating frequency (FG); and
▪ a local comb (POL) comprising at least one local stripe, the at least one local stripe having a stable frequency and derived from the generating frequency (FG);
∘ an emitter telescope (5) adapted to emit an emission signal (6) towards the matter crossed by the emission signal (6), the emission signal (6) comprising the first and second combs (P1, P2);
- a reception channel (7) comprising:
∘ a receiver telescope (8) adapted to receive a signal (9) reflected by the matter crossed by the emission signal (6), the reflected signal (9) comprising:
▪ a first reflected comb, the first reflected comb comprising at least one first stripe reflected by the matter crossed by the at least one first stripe of the first comb of the emission signal,
▪ a second reflected comb, the second reflected comb comprising at least one second stripe reflected by the matter crossed by the at least one second stripe of the second comb of the emission signal;
each stripe of the local comb being associated with a corresponding first stripe of the first reflected comb, and with a corresponding second stripe of the second reflected comb;
∘ a detection system (10) configured to detect:
▪ at least one first beat signal (11), of the at least one stripe of the local comb with the corresponding first stripe of the first reflected comb; and
▪ at least one second beat signal (12), of the at least one stripe of the local comb with the corresponding second stripe of the second reflected comb; and
▪ at least one third beat signal (13) of the at least one first beat signal (11) with the at least one second beat signal (12);
the third beat signal being filtered around a frequency equal to an absolute value of a difference between a first frequency shift (FMA01) and a second frequency shift (FMAO2).

2. The device according to claim 1, wherein each of the first comb, the second comb and the local comb comprises a number of stripes greater than or equal to 1, preferably greater than or equal to 2, preferably comprised between 2 and 13.

3. The device according to claim 2, wherein each of the first comb, the second comb and the local comb comprises a number of stripes greater than or equal to 2, preferably comprised between 2 and 13.

4. The device according to claim 3, wherein the frequencies of the stripes of the local comb are evenly spaced, around the generating frequency, with a local step (FMEOL), the value of the local step (FMEOL) being comprised between 500 MHz and 2000 MHZ, preferably equal to 1000 MHz.

5. The device according to any of claims 3 or 4, wherein the frequencies of stripes of the first comb are evenly spaced according to a first step (FMEO1), around a first central frequency (FC1) equal to the sum of the generating frequency and a first frequency shift (FMA01).

6. The device according to any of claims 3 to 5, wherein the frequencies of stripes of the second comb are evenly spaced according to a second step (FMEO2), around a second central frequency (FC2) equal to the sum of the generating frequency and the second frequency shift (FMAO2).

7. The device according to claim 6, wherein the value of the first step (FMEO1) and the value of the second step (FMEO2) are equal to the sum of the value of the local step (FMEOL) with a deviation (D).

8. The device according to any of the preceding claims, the detection system comprises a digital processing unit (UTN) configured to process the at least one first beat signal (11) and the at least one second beat signal (12) so as to generate at least one third beat signal (13).

9. The device according to claim 8, wherein the digital processing unit (UTN) comprises:
- an analog-to-digital converter (ADC) configured to digitize a time signal comprising the at least one first beat signal (11) and the at least one second beat signal (12), so as to generate a digital signal (11N, 12N);
- a first computing unit (FFT) configured to compute a first digital spectrum (SN11, SN12) of the digital signal (11N, 12N);
- a first filtering unit (UF1) configured to separate different spectral components of the previously computed digital spectrum (SN11, SN12);
- a second computing unit (FFT⁻¹) configured to convert, in parallel, each spectral component separated by the first filtering unit (UF1) from the spectral domain into the time domain, so as to generate, at least one time component comprising at least one first time component of the at least one first beat signal (11) and at least one second time component of the at least one second beat signal (12), each first time component of the at least one time component and each second time component of the at least one second time component corresponding to a stripe of the local comb;
- a mixer (MEL) configured to make beat, in parallel for each stripe of the local comb, the corresponding first time component of the at least one first beat signal (11) and the corresponding second time component of the at least one second beat signal (12), so as to generate, a third beat signal of the at least one third beat signal, corresponding to each stripe of the local comb;
- a third computing unit (FFT2), configured to compute a digital spectrum of each third beat signal of the at least one third beat signal, in parallel for each third beat signal;
- a second filtering unit (UF2) configured to isolate, within each third beat signal of the at least one third beat signal, a low-frequency spectral component (CSBF1, CSBF2, CSBF3, ..., CSBFi, ...).

10. A LIDAR detection method (100) for a remote spectroscopy of a matter, comprising the following steps of:
- emitting (101), by a laser source (3), a laser stripe at a generating frequency (FG);
- generating (102), by a frequency generator (4), from the laser stripe:
i. a first comb (P1) comprising at least one first stripe, the at least one first stripe having a stable frequency and derived from the generating frequency (FG); and
ii. a second comb (P2) comprising at least one second stripe, the at least one second stripe having a stable frequency and derived from the generating frequency; and
iii. a local comb (POL) comprising at least one local stripe, the at least one local stripe having a stable frequency and derived from the generating frequency;
- emitting (103), by an emitter telescope (5), an emission signal (6) towards the matter crossed by the emission signal (6), the emission signal (6) comprising the first and second combs (P1, P2);
- receiving (104) by a receiver telescope (8):
b. a signal (9) reflected by the matter crossed by the emission signal (6), the reflected signal (9) comprising:
i. a first reflected comb, the first reflected comb comprising at least one first stripe reflected by the matter crossed by the at least one first stripe of the first comb of the emission signal,
ii. a second reflected comb, the second reflected comb comprising at least one second stripe reflected by the matter crossed by the at least one second stripe of the second comb of the emission signal;
each stripe of the local comb being associated with a corresponding first stripe of the first reflected comb, and with a corresponding second stripe of the second reflected comb;
- detecting (105) by a detection system (10):
iii. at least one first beat signal (11), of the at least one stripe of the local comb with the corresponding first stripe of the first reflected comb; and
iv. at least one second beat signal (12), of the at least one stripe of the local comb with the corresponding second stripe of the second reflected comb; and
v. a third beat signal (13) of the at least one first beat signal with the at least one second beat signal;
the third beat signal being filtered around a frequency equal to an absolute value of a difference between a first frequency shift (FMA01) and a second frequency shift (FMAO2).
